# EUROPÄISCHE PATENTSCHRIFT

(11) **EP 1 966 501 B1**
(45) Veröffentlichungstag und Bekanntmachung des Hinweises auf die Patenterteilung: **27.06.2012**
(21) Anmeldenummer: 06828561.8
(22) Anmeldetag: 29.11.2006
(51) Int. Cl.: F16D 13/58, F16F 1/32

(54) **SCHWENKLAGERUNG FÜR EIN TELLERFEDERARTIGES HEBELFEDERELEMENT UND KUPPLUNGSEINRICHTUNG**
SWIVEL BEARING FOR A DISK SPRING-TYPE LEVER SPRING ELEMENT, AND CLUTCH MECHANISM
PALIER PIVOTANT ANNULAIRE UTILISE DANS UN ELEMENT RESSORT DE LEVIER DE TYPE RESSORT A DISQUES ET DISPOSITIF DE COUPLAGE

(30) Priorität: 17.12.2005 DE 102005060593
(43) Veröffentlichungstag der Anmeldung: 10.09.2008
(73) Patentinhaber: Schaeffler Technologies AG & Co. KG, 91074 Herzogenaurach (DE)
(72) Erfinder: METZINGER, Manuel, 77815 Bühl (DE); BERGMANN, Jochen, 76131 Karlsruhe (DE)
(86) Internationale Anmeldenummer: PCT/DE2006/002100
(87) Internationale Veröffentlichungsnummer: WO 2007/073710

(56) Entgegenhaltungen:
- EP-A- 1 568 905
- DE-A1-102005 001 909
- US-A1- 4 646 892

## Beschreibung

Die Erfindung betrifft eine Schwenklagerung für ein teilerfederartiges Hebelfederelement gemäß dem Oberbegriff des Patentanspruchs 1. Die Erfindung betrifft auch eine Kupplungseinrichtung mit einer Trägereinrichtung, an der ein tellerfederartiges Hebelfederelement mit Hilfe einer vorab beschriebenen Schwenklagerung gelagert ist.

Herkömmliche Tellerfedern werden zum Beispiel mit Hilfe eines Sprengrings schwenkbar an einem Außenlamellenträger einer Lamellenkupplung gelagert.

In der US 4,646,892 ist eine Schwenklagerung gemäß dem Oberbegriff des Patentanspruchs 1 offenbart.

Aufgabe der Erfindung ist es, eine einfach zu montierende Schwenklagerung für ein tellerfederartiges Hebelfederelement zu schaffen.

Die Aufgabe wird erfindungsgemäß gelöst durch eine Schwenklagerung für ein tellerfederartiges Hebelfederelement gemäß Patentanspruch 1 mit einem ringartigen Grundkörper, von dem sich Hebelarme radial nach außen erstrecken, die sich mit ihren äußeren Enden an einer Trägereinrichtung abstützen und an ihren äußeren Enden eine radiale Profilierung aufweisen. Die radiale Profilierung wirkt mit einer Gegenprofilierung an der Trägereinrichtung zusammen. Die Profilierung an den Enden der Hebelarme und die Gegenprofilierung an der Trägereinrichtung sind so ausgeführt, dass das Hebelfederelement mit der radialen Profilierung in axialer Richtung relativ zu der Trägereinrichtung mit der Gegenprofilierung bewegbar ist. Die Gegenprofilierung an der Trägereinrichtung ist in axialer Richtung durch eine in Umfangsrichtung verlaufende Rille unterbrochen. Die Rille ermöglicht ein Verdrehen des Hebelfederelements mit der radialen Profilierung in der Trägereinrichtung. Durch Verdrehung können die beiden Profilierungen in axialer Richtung überlappend angeordnet werden. Dadurch wird eine Bewegung des Hebelfederelements in axialer Richtung unmöglich gemacht und somit das Hebelfederelement in axialer Richtung in der Trägereinrichtung fixiert. Die Hebelarme sind durch den ringartigen Grundkörper miteinander verbunden. Durch diese Verbindungen bekommt das Hebelfederelement Federeigenschaften und ähnelt einer Tellerfeder. Die Hebelarme sind in der Art von einarmigen Hebeln über ihren Außenrand an der Trägereinrichtung verschwenkbar abgestützt.

Bevorzugte Ausführungsbeispiele der vorliegenden Erfindung sind in den abhängigen Ansprüchen dargelegt.

Ein bevorzugtes Ausführungsbeispiel der Schwenklagerung ist dadurch gekennzeichnet, dass die Profilierung von einer Außenverzahnung gebildet wird. Die Außenverzahnung kann durchgehend ausgebildet sein, kann aber auch nur einzelne Zähne oder Verzahnungsabschnitte umfassen.

Ein weiteres bevorzugtes Ausführungsbeispiel der Schwenklagerung ist dadurch gekennzeichnet, dass die Gegenprofilierung von einer Innenverzahnung gebildet wird. Bei der Trägereinrichtung handelt es sich vorzugsweise um einen Außenlamellenträger einer Lamellenkupplung, der zur drehfesten Verbindung mit den Lamellen mit einer Innenverzahnung ausgestattet ist.

Ein weiteres bevorzugtes Ausführungsbeispiel der Schwenklagerung ist dadurch gekennzeichnet, dass an den Hebelarmen jeweils mindestens ein Zahn ausgebildet ist, der komplementär zu der Innenverzahnung der Trägereinrichtung gestaltet ist. Die Zähne sind so ausgeführt, dass ein axiales Einführen des Hebelfederelements in die Trägereinrichtung ermöglicht wird. Die Hebelarme mit den Zähnen sind vorzugsweise aus einem Blechteil ausgestanzt.

Ein weiteres bevorzugtes Ausführungsbeispiel der Schwenklagerung ist dadurch gekennzeichnet, dass von dem Grundkörper mindestens eine elastische Einspannzunge mit einem Ende ausgeht, das in eine Verdrehsicherungsvertiefung eingreift, die an der Trägereinrichtung vorgesehen ist. Dadurch wird das Hebelfederelement auf einfache Art und Weise gegen Verdrehen gesichert.

Ein weiteres bevorzugtes Ausführungsbeispiel der Schwenklagerung ist dadurch gekennzeichnet, dass sich das Ende der Einspannzunge in radialer Richtung nach außen über den äußeren Umfang der Profilierung an dem Hebelfederelement hinaus erstreckt. Dadurch wird auf einfache Art und Weise sichergestellt, dass das Ende der Einspannzunge bei der Montage des Hebelfederelements an der Trägereinrichtung zur Anlage kommt.

Ein weiteres bevorzugtes Ausführungsbeispiel der Schwenklagerung ist dadurch gekennzeichnet, dass die Verdrehsicherungsvertiefung von einer Nut gebildet wird, die sich in radialer Richtung erstreckt. Das Ende der Einspannzunge rastet bei der Montage, das heißt beim Verdrehen der Tellerfeder relativ zu der Trägereinrichtung, in die Nut ein.

Ein weiteres bevorzugtes Ausführungsbeispiel der Schwenklagerung ist dadurch gekennzeichnet, dass mehrere Einspannzungen gegen die Hebelarme verspannt sind. Durch die vorzugsweise in Umfangsrichtung gleichmäßig verteilt angeordneten und vorgespannten Einspannzungen werden die Hebelarme an einer Flanke der Rille in Anlage gehalten.

Ein weiteres bevorzugtes Ausführungsbeispiel der Schwenklagerung ist dadurch gekennzeichnet, dass sich von dem ringartigen Grundkörper mehrere Federzungen radial nach innen erstrecken. Die Federzungen dienen, wie bei herkömmlichen Tellerfedern, zum Beispiel zum Betätigen einer Kupplungseinrichtung.

Die Erfindung betrifft auch eine Kupplungseinrichtung mit mindestens einer Trägereinrichtung, an der ein tellerfederartiges Hebelfederelement mit Hilfe einer vorab beschriebenen Schwenklagerung schwenkbar gelagert ist.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine Drehmomentübertragungseinrichtung mit einer erfindungsgemäßen Schwenklagerung im Halbschnitt;
- Figur 2: eine perspektivische Darstellung eines erfindungsgemäßen Hebelfederelements;
- Figur 3: einen vergrößerten Ausschnitt aus Figur 1;
- Figur 4: eine ähnliche Darstellung wie in Figur 3 mit eingezeichneten Kraftvektoren;
- Figur 5: eine Ansicht aus der Richtung V in Figur 6;
- Figur 6: einen vergrößerten Ausschnitt aus Figur 9;
- Figur 7: eine Hebelfeder, wie sie in Figur 2 dargestellt ist, nach dem Einsetzen in eine Trägereinrichtung in der Draufsicht;
- Figur 8: eine ähnliche Darstellung wie in Figur 7 mit einem angesetzten Montagewerkzeug und
- Figur 9: eine ähnliche Darstellung wie in den Figuren 7 und 8, wobei sich das Hebelfederelement in seiner Endstellung befindet.

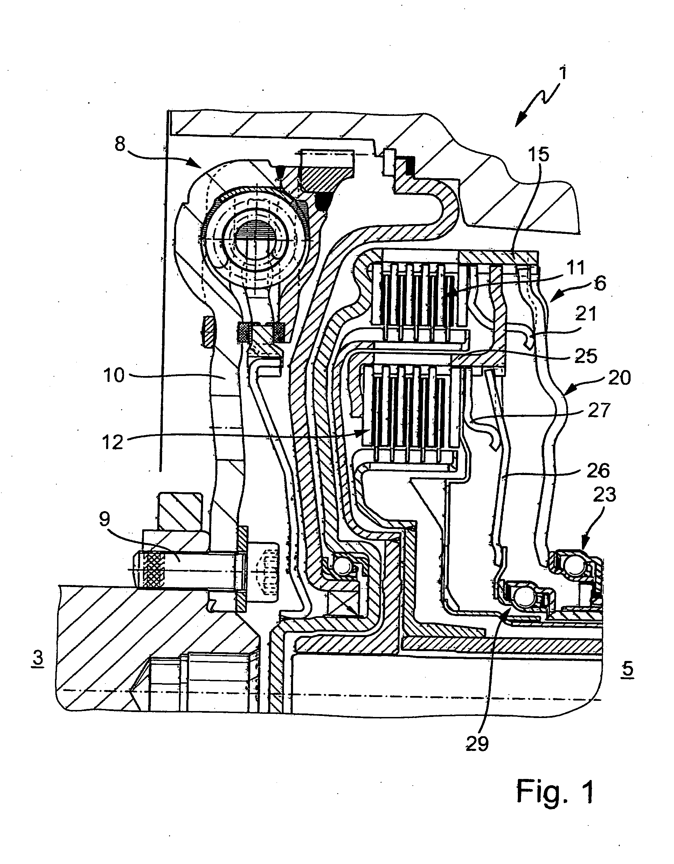

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle ausgeht, und einem Getriebe 5 ist eine nasslaufende Doppelkupplung 6 in Lamellenbauweise angeordnet. Zwischen die Antriebseinheit 3 und die Doppelkupplung 6 ist eine Drehschwingungsdämpfungseinrichtung 8 geschaltet. Bei der Drehschwingungsdämpfungseinrichtung 8 handelt es sich um ein Zweimassenschwungrad.

Die Kurbelwelle der Brennkraftmaschine 3 ist über Schraubverbindungen 9 fest mit einem Eingangsteil 10 der Drehschwingungsdämpfungseinrichtung 8 verbunden. Der Aufbau und die Funktion der Drehschwingungsdämpfungseinrichtung 8 und der Doppelkupplung 6 werden als bekannt vorausgesetzt und daher nicht im Einzelnen erläutert.

Die Doppelkupplung 6 umfasst eine erste Lamellenkupplungsanordnung 11 und eine zweite Lamellenkupplung 12, die radial innerhalb der ersten Lamellenkupplungsanordnung 11 angeordnet ist. Die erste Lamellenkupplungsanordnung 11 umfasst einen Außenlamellenträger 15. An dem der Antriebseinheit 3 abgewandten Ende des Außenlamellenträgers 15 ist ein Hebelfederelement 20 schwenkbar gelagert. Das Hebelfederelement 20 ist an einem Abstützelement 21 abgestützt. Radial innen greift an dem Hebelfederelement 20 ein Betätigungslager 23 an. Die zweite Lamellenkupplungsanordnung 12 umfasst einen Außenlamellenträger 25, an dem ein weiteres Hebelfederelement 26 schwenkbar gelagert ist. Das Hebelfederelement 26 ist an einem Abstützelement 27 abgestützt. Radial innen greift an dem Hebelfederelement 26 ein weiteres Betätigungslager 29 an. Die beiden Betätigungslager 23 und 29 dienen in bekannter Art und Weise dazu, die Lamellenkupplungsanordnungen 11 und 12 zu betätigen.

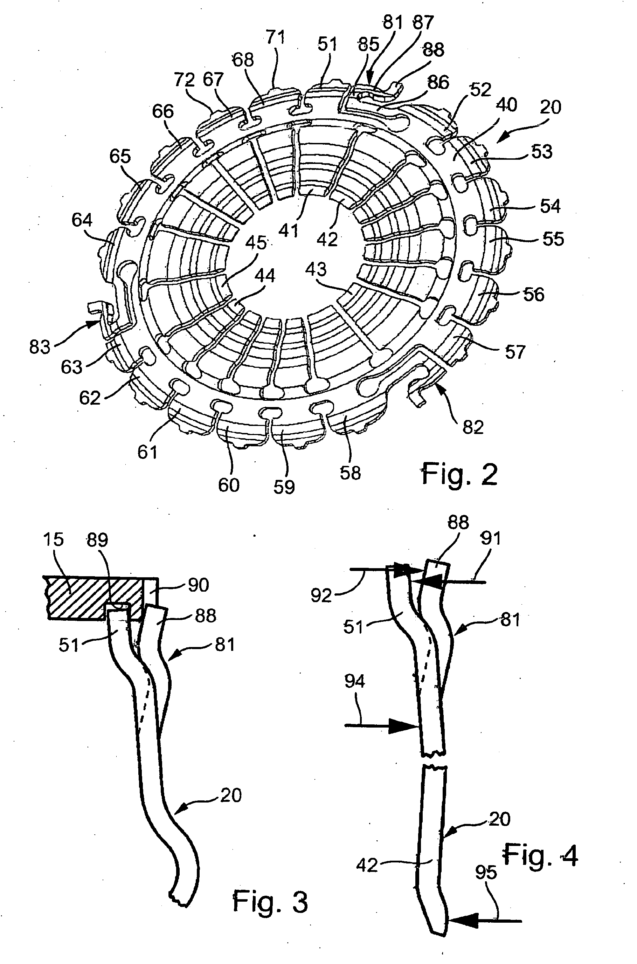

In Figur 2 ist das Hebelfederelement 20 perspektivisch dargestellt. Das Hebelfederelement 20 umfasst einen ringförmigen Grundkörper 40, von dem sich insgesamt achtzehn Federzungen 41 bis 45 radial nach innen erstrecken, von denen jedoch nur fünf mit Bezugszeichen versehen sind. Die Federzungen 41 bis 45 sind gleich lang ausgebildet, weisen aber unterschiedliche Breiten auf. Darüber hinaus verringert sich die Breite, das heißt die Ausdehnung der Federzungen in Umfangsrichtung, radial nach innen. Das Hebelfederelement 20 ähnelt im Aufbau einer Tellerfeder und wird daher auch als Tellerfeder bezeichnet.

Von dem ringförmigen oder ringartigen Grundkörper 40 erstrecken sich achtzehn Hebelarme 51 bis 68 in radialer Richtung nach außen. Die Hebelarme 51, die auch als Hauptzungen bezeichnet werden, weisen radial außen jeweils einen Zahn 71, 72 auf. Die Zähne 71, 72 bilden radial außen an dem Hebelfederelement 20 eine radiale Profilierung.

Von drei Hebelarmen 52, 58 und 64 geht jeweils eine Einspannzunge 81, 82, 83 aus. Die Einspannzungen 81 bis 83 sind elastisch und gleich ausgebildet. Im Folgenden wird deshalb nur die Einspannzunge 81 detailliert beschrieben. Die Einspannzunge 81 ist im Wesentlichen U-förmig ausgebildet und weist eine Basis 85 auf, von der zwei Schenkel 86 und 87 ausgehen. Der Schenkel 86 ist einstückig mit der Hauptzunge 52 verbunden und erstreckt sich im Wesentlichen in Umfangsrichtung. Die Basis 85 erstreckt sich im Wesentlichen in radialer Richtung. Der Schenkel 86 erstreckt sich im Wesentlichen parallel zu dem Schenkel 87 in Umfangsrichtung. Von dem Schenkel 87 ist ein freies Ende 88 der Einspannfeder 81 abgewinkelt. Das Ende 88 der Einspannfeder 81 erstreckt sich in radialer Richtung.

In Figur 3 ist der Ausschnitt mit der Schwenklagerung der Hebelfeder 20 an dem Außenlamellenträger 15, der auch als Trägereinrichtung bezeichnet wird, vergrößert dargestellt. Zur Schwenklagerung des Hebelfederelements 20 weist der Außenlamellenträger 15 eine Rille 89 auf. Die Rille 89 wird von einer Nut gebildet, die sich in Umfangsrichtung erstreckt und einen rechteckigen Querschnitt aufweist. In der Rille oder Ringnut 89 ist das freie Ende des Hebelarms 51 aufgenommen. In einem axialen Abstand zu dem freien Ende des Hebelarms 51 liegt das freie Ende 88 der Einspannzunge 81 in einer Verdrehsicherungsvertiefung 90 an dem Außenlamellenträger 15 an.

In Figur 4 ist durch Pfeile 91,92 und 94, 95 angedeutet, wo welche Kräfte wirken. Durch die Pfeil 91 ist eine innere Einspannkraft angedeutet. Durch den Pfeil 92 ist die Summe aus der Einspannkraft und einer Einrückkraft angedeutet. Durch den Pfeil 94 ist eine Belagkraft angedeutet. Durch den Pfeil 95 ist eine Einrückkraft angedeutet. Bis zum Erreichen eines Tastpunkts ist die Belagkraft 94 gleich Null. Tastpunkt bedeutet die Stelle beim Kupplungsbetätigen, an der das Lüftspiel überwunden ist und sich die Lamellenbeläge oder die Kupplungsscheibe mit den Reibpartnern erstmals in Kontakt befinden. Für eine hysteresearme Kupplungsbetätigung ist das Hebelfederelement 20 mit einer Selbsteinspannung ausgestattet. Durch die Selbsteinspannung wird ein Nutflankenwechsel der Hebelarme in der Nut 89 des Außenlamellenträgers 15 verhindert. Zu diesem Zweck wird durch eine elastische Verformung der Einspannzunge 81, die unter Vorspannung an dem Außenlamellenträger 15 anliegt, die innere Einspannkraft 91 erzeugt, die im günstigsten Toleranzfall noch mindestens so groß ist wie die Einrückkraft an der Stelle des Tastpunkts. Zusätzlich muss die Einspannzunge 81 noch die äußere Einrückkraft aufnehmen. In der Summe wirken auf die Einspannzunge 81 dann die Einspannkraft und die Einrückkraft, die durch den Pfeil 92 angedeutet ist. Auf die Hauptzunge 51 und die Flanke der Nut 89 wirkt bei offener Kupplung, wie auch bei der Einspannzunge, nur die innere Einspannkraft. Bei Betätigung der Kupplung sinkt die Kraft auf die äußeren Hauptzungen, bis sie beim Erreichen des Tastpunkts im ungünstigsten Toleranzfall zu Null wird.

Nach Überschreiten des Tastpunkts kann im Lamellenpaket die Belagkraft zur Momentenübertragung aufgebaut werden. Hierfür stützen sich die äußeren Hauptzungen des Hebelfederelements in der Ringnut 89 des Außenlamellenträgers 15 ab.

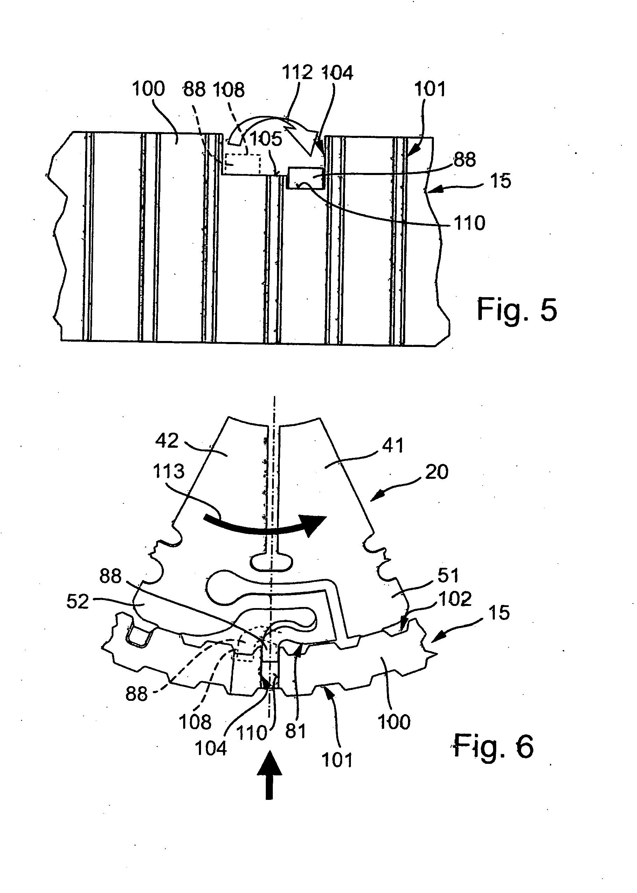

Um das eingespannte Hebelfederelement gegen Herausdrehen zu sichern, wird dieses bei der Montage durch Verdrehen in dem festgehaltenen Außenlamellenträger 15 eingerastet. Dieser Einrastvorgang ist in den Figuren 5 und 6 in verschiedenen Ansichten dargestellt. Der Außenlamellenträger 15 hat im Wesentlichen die Gestalt eines Kreiszylindermantels 100, der mit einer Außenverzahnung 101 und einer Innenverzahnung 102 versehen ist. Der Außenlamellenträger 15 weist eine im Wesentlichen quaderförmige Ausnehmung 104 mit einem Boden 105 auf. In den Figuren 5 und 6 ist bei 108 gestrichelt angedeutet, dass das freie Ende 88 der Einspannzunge 81 zunächst an dem Boden 105 der Ausnehmung 104 anliegt. Wenn das Hebelfederelement in Richtung eines Pfeils (112 in Figur 5, 113 in Figur 6) verdreht wird, dann schnappt die unter Spannung stehende Einspannfederzunge 81 mit ihrem abgewinkelten Ende 88 in eine Nut 110 ein, die in dem Boden 105 der Ausnehmung 104 ausgespart ist. Dadurch wird ein weiteres Verdrehen des Hebelfederelements verhindert. Mit Hilfe eines keilförmigen Werkzeugs 120 kann das Ende 88 mit der Einspannfederzunge 81 wieder soweit aus der Nut 110 angehoben werden, dass ein Verdrehen des Hebelfederelements wieder ermöglicht wird. Die Nut 110 stellt die Verdrehsicherungsvertiefung dar, die in Figur 3 mit 90 bezeichnet ist.

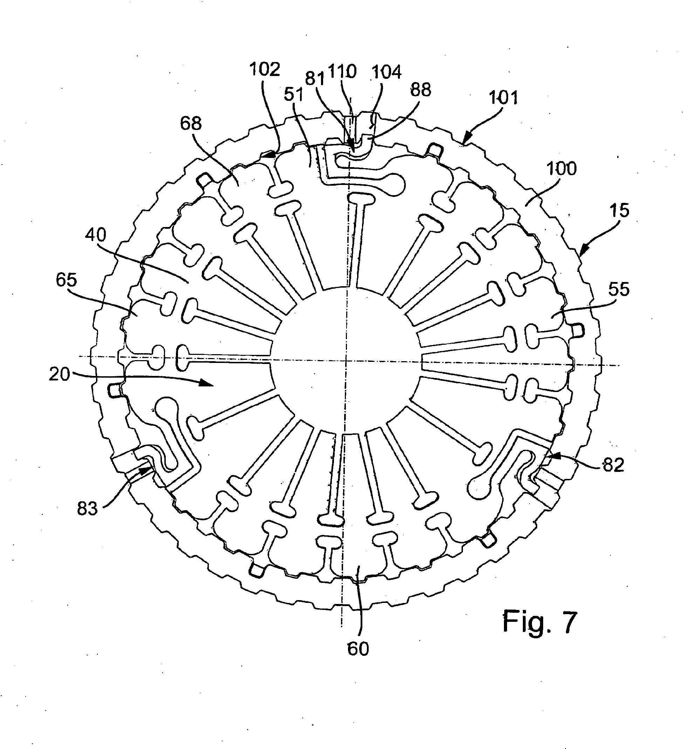

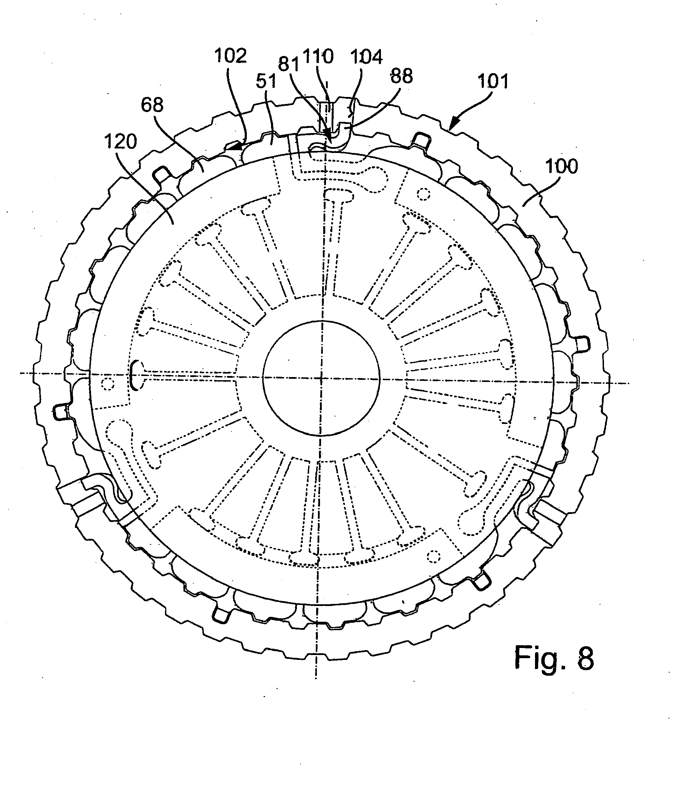

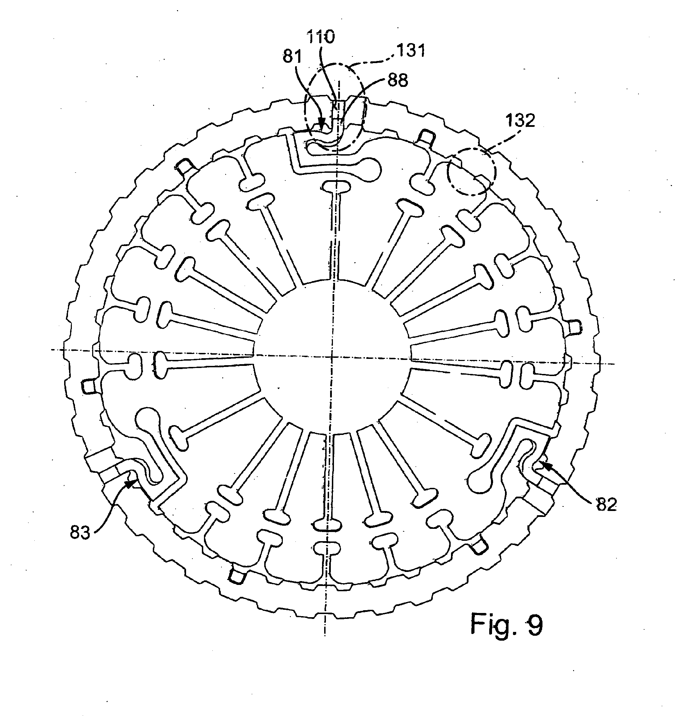

In den Figuren 7 bis 9 ist die Reihenfolge bei der Montage des Hebelfederelements 20 in dem Außenlamellenträger 15 dargestellt. Zunächst wird das Hebelfederelement 20, das auch als Tellerfeder bezeichnet wird, in den Außenlamellenträger 15, der auch als Lamellenträger bezeichnet wird, eingelegt, wie in Figur 7 dargestellt ist. Dann werden, wie in Figur 8 angedeutet ist, die äußeren Hauptzungen oder Hebelarme 51 bis 68 der Tellerfeder 20 in axialer Richtung soweit gegen die Spannkraft der Einspannzungen 81 bis 83 bewegt, bis die Zähne am Außenrand der Hauptzungen im Bereich der Rille oder Ringnut (89 in Figur 3) angeordnet sind beziehungsweise dieser gegenüberstehen. Daraufhin wird die Tellerfeder 20 mit dem gleichen Werkzeug 120 um eine halbe Teilung der Innenverzahnung 102 des Außenlamellenträger 15 verdreht, so dass sich die Zähne der Hebelarme oder Hauptzungen in der Ringnut und damit im Berg der Innenverzahnung 102 des Lamellenträgers 15 befinden, wie in Figur 9 an der Stelle 132 zu sehen ist. Dabei rasten die Einspannzungen 81 bis 83 mit ihrem freien Ende 88 in die zugehörige Nut in dem Lamellenträger 15 ein, wie bei 131 in Figur 9 zu sehen ist.

Die Erfindung liefert ein mechanisches Einspannprinzip des Hebelfederelements, bei dem auf herkömmliche zusätzliche Bauteile verzichtet werden kann. Die Hebelarme und die Einspannfederzungen werden bei der axialen Montage gegeneinander verspannt. Durch das Verrasten der Enden der Einspannzungen wird ein Zurückdrehen und Lösen der Einspannung verhindert. Dabei erfolgt gleichzeitig eine Flankenzentrierung. Darüber hinaus weisen die einzelnen Federelemente des Hebelfederelements 20 eine spannungsoptimierte Geometrie auf.

### Bezugszeichenliste

- 1.: Antriebsstrang
- 3.: Antriebseinheit
- 5.: Getriebe
- 6.: Doppelkupplung
- 8.: Drehschwingungsdämpfereinrichtung
- 9.: Schraubverbindung
- 10.: Eingangsteil
- 11.: Lamellenkupplungsanordnung
- 12.: Lamellenkupplungsanordnung
- 15.: Außenlamellenträger
- 20.: Hebelfederelement
- 21.: Abstützelement
- 23.: Betätigungslager
- 25.: Außenlamellenträger
- 26.: Hebelfederelement
- 27.: Abstützelement
- 29.: Betätigungslager
- 40.: Grundkörper
- 41.: Federzunge
- 42.: Federzunge
- 43.: Federzunge
- 44.: Federzunge
- 45.: Federzunge
- 51.: Hebelarm
- 52.: Hebelarm
- 53.: Hebelarm
- 54.: Hebelarm
- 55.: Hebelarm
- 56.: Hebelarm
- 57.: Hebelarm
- 58.: Hebelarm
- 59.: Hebelarm
- 60.: Hebelarm
- 61.: Hebelarm
- 62.: Hebelarm
- 63.: Hebelarm
- 64.: Hebelarm
- 65.: Hebelarm
- 66.: Hebelarm
- 67.: Hebelarm
- 68.: Hebelarm
- 71.: Zahn
- 72.: Zahn
- 81.: Einspannzunge
- 82.: Einspannzunge
- 83.: Einspannzunge
- 85.: Basis
- 86.: Schenkel
- 87.: Schenkel
- 88.: Ende
- 89.: Ringnut
- 90.: Verdrehsicherungsvertiefung
- 91.: Pfeil
- 92.: Pfeil
- 94.: Pfeil
- 95.: Pfeil
- 100.: Kreiszylindermantel
- 101.: Außenverzahnung
- 102.: Innenverzahnung
- 104.: Ausnehmung
- 105.: Boden
- 108.: Stelle
- 110.: Nut
- 112.: Pfeil
- 113.: Pfeil
- 120.: Werkzeug
- 131.: Stelle
- 132.: Stelle

## Patentansprüche

1. Schwenklagerung für ein tellerfederartiges Hebelfederelement (20) mit einem ringartigen Grundkörper (40), von dem sich Hebelarme (51-68) radial nach außen erstrecken, die sich mit ihren äußeren Enden an einer Trägereinrichtung (15) abstützen, **dadurch gekennzeichnet, dass** die Hebelarme (51-68) an ihren äußeren Enden eine radiale Profilierung (71,72) aufweisen, die mit einer Gegenprofilierung (102) an der Trägereinrichtung (15) zusammenwirkt, wobei die Gegenprofilierung (102) an der Trägereinrichtung (15) in axialer Richtung durch eine in Umfangsrichtung verlaufende Rille (89) unterbrochen ist.

2. Schwenklagerung nach Anspruch 1, **dadurch gekennzeichnet, dass** die Profilierung (71,72) von einer Außenverzahnung gebildet wird.

3. Schwenklagerung nach einem der vorhergehenden Ansprüche, **dadurch gekennzeichnet, dass** die Gegenprofilierung (102) von einer Innenverzahnung gebildet wird.

4. Schwenklagerung nach Anspruch 3, **dadurch gekennzeichnet, dass** an den Hebelarmen (51-68) jeweils mindestens ein Zahn (71,72) ausgebildet ist, der komplementär zu der Innenverzahnung (102) der Trägereinrichtung (15) gestaltet ist.

5. Schwenklagerung nach einem der vorhergehenden Ansprüche, **dadurch gekennzeichnet, dass** von dem Grundkörper (40) mindestens eine elastische Einspannzunge (81-83) mit einem Ende (88) ausgeht, das in eine Verdrehsicherungsvertiefung (90) eingreift, die an der Trägereinrichtung (15) vorgesehen ist.

6. Schwenklagerung nach Anspruch 5, **dadurch gekennzeichnet, dass** sich das Ende (88) der Einspannzunge (81) in radialer Richtung nach außen über den äußeren Umfang der Profilierung (71,72) an dem Hebelfederelement (20) hinaus erstreckt.

7. Schwenklagerung nach Anspruch 5 oder 6, **dadurch gekennzeichnet, dass** die Verdrehsicherungsvertiefung (90) von einer Nut (110) gebildet wird, die sich in radialer Richtung erstreckt.

8. Schwenklagerung nach einem der Ansprüche 5 bis 7, **dadurch gekennzeichnet, dass** mehrere Einspannzungen (81-83) gegen die Hebelarme (51-68) verspannt sind.

9. Schwenklagerung nach einem der vorhergehenden Ansprüche, **dadurch gekennzeichnet, dass** sich von dem ringartigen Grundkörper (40) mehrere Federzungen (41-45) radial nach innen erstrecken.

10. Kupplungseinrichtung mit mindestens einer Trägereinrichtung (15,25), an der ein tellerfederartiges Hebelfederelement (20,26) mit Hilfe einer Schwenklagerung nach einem der vorhergehenden Ansprüche schwenkbar gelagert ist.

## Claims

1. Pivoting bearing for a disc spring-like lever spring element (20) with a ring-like basic body (40), from which lever arms (51-68) extend radially to the outside which are supported by way of their outer ends on a carrier device (15), **characterized in that**, at their outer ends, the lever arms (51-68) have a radial profiling (71, 72) which interacts with a mating profiling (102) on the carrier device (15), the mating profiling (102) on the carrier device (15) being interrupted in the axial direction by a channel (89) which extends in the circumferential direction.

2. Pivoting bearing according to Claim 1, **characterized in that** the profiling (71, 72) is formed by an external toothing system.

3. Pivoting bearing according to one of the preceding claims, **characterized in that** the mating profiling (102) is formed by an internal toothing system.

4. Pivoting bearing according to Claim 3, **characterized in that** in each case at least one tooth (71, 72) which is of complementary design with respect to the internal toothing system (102) of the carrier device (15) is formed on the lever arms (51-68).

5. Pivoting bearing according to one of the preceding claims, **characterized in that** at least one elastic clamping tongue (81-83) with an end (88) emanates from the basic body (40), which end (88) engages into an anti-rotation safeguard depression (90) which is provided on the carrier device (15).

6. Pivoting bearing according to Claim 5, **characterized in that** the end (88) of the clamping tongue (81) extends outwards in the radial direction beyond the outer circumference of the profiling (71, 72) on the lever spring element (20).

7. Pivoting bearing according to Claim 5 or 6, **characterized in that** the anti-rotation safeguard depression (90) is formed by a groove (110) which extends in the radial direction.

8. Pivoting bearing according to one of Claims 5 to 7, **characterized in that** a plurality of clamping tongues (81-83) are stressed against the lever arms (51-68).

9. Pivoting bearing according to one of the preceding claims, **characterized in that** a plurality of spring tongues (41-45) extend radially inwards from the ring-like basic body (40).

10. Clutch device having at least one carrier device (15, 25), on which a disc spring-like lever spring element (20, 26) is mounted pivotably with the aid of a pivoting bearing according to one of the preceding claims.

## Revendications

1. Palier pivotant pour un élément ressort de levier de type ressort à disques (20), comprenant un corps de base (40) de type bague, depuis lequel s'étendent radialement vers l'extérieur des bras de levier (51-68) qui s'appuient avec leurs extrémités extérieures contre un dispositif de support (15), **caractérisé en ce que** les bras de levier (51-68) présentent à leurs extrémités extérieures un profilage radial (71, 72) qui coopère avec un profilage conjugué (102) sur le dispositif de support (15), le profilage conjugué (102) étant interrompu au niveau du dispositif de support (15) dans la direction axiale par une rainure (89) s'étendant dans la direction périphérique.

2. Palier pivotant selon la revendication 1, **caractérisé en ce que** le profilage (71, 72) est formé par une denture extérieure.

3. Palier pivotant selon l'une quelconque des revendications précédentes, **caractérisé en ce que** le profilage conjugué (102) est formé par une denture interne.

4. Palier pivotant selon la revendication 3, **caractérisé en ce qu'**au moins une dent (71, 72) est réalisée à chaque fois sur les bras de levier (51-68), laquelle est configurée de manière complémentaire de la denture interne (102) du dispositif de support (15).

5. Palier pivotant selon l'une quelconque des revendications précédentes, **caractérisé en ce qu'**au moins une langue de serrage élastique (81-83) part du corps de base (40) avec une extrémité (88) qui vient en prise dans un renfoncement de fixation en rotation (90) qui est prévu sur le dispositif de support (15).

6. Palier pivotant selon la revendication 5, **caractérisé en ce que** l'extrémité (88) de la langue de serrage (81) s'étend dans la direction radiale vers l'extérieur au-delà de la périphérie extérieure du profilage (71, 72) sur l'élément ressort de levier (20).

7. Palier pivotant selon la revendication 5 ou 6, **caractérisé en ce que** le renfoncement de fixation en rotation (90) est formé par une rainure (110) qui s'étend dans la direction radiale.

8. Palier pivotant selon l'une quelconque des revendications 5 à 7, **caractérisé en ce que** plusieurs langues de serrage (81-83) sont serrées contre les bras de levier (51-68).

9. Palier pivotant selon l'une quelconque des revendications précédentes, **caractérisé en ce que** plusieurs langues de ressort (41-45) s'étendent radialement vers l'intérieur depuis le corps de base de type bague (40).

10. Dispositif d'embrayage comprenant au moins un dispositif de support (15, 25), sur lequel est monté de manière pivotante un élément ressort de levier (20, 26) de type ressort à disques, à l'aide d'un palier pivotant selon l'une quelconque des revendications précédentes.
